# EUROPEAN PATENT APPLICATION

(11) **EP 2 919 301 A1**
(43) Date of publication of application: **16.09.2015**
(21) Application number: 13853237.9
(22) Date of filing: 03.10.2013
(51) Int. Cl.: H01M 4/38, H01M 4/134, H01M 10/052

(54) **METHOD FOR PRODUCING SILICON-CONTAINING PARTICLES FOR ANODE ACTIVE MATERIAL FOR NON-AQUEOUS ELECTROLYTE SECONDARY BATTERY, ANODE MEMBER FOR NON-AQUEOUS ELECTROLYTE SECONDARY BATTERY, NON-AQUEOUS ELECTROLYTE SECONDARY BATTERY, AND SILICON-CONTAINING PARTICLES FOR ANODE ACTIVE MATERIAL FOR NON-AQUEOUS ELECTROLYTE SECONDARY BATTERY**

(30) Priority: 08.11.2012 JP 2012246220
(71) Applicant: Shin-Etsu Chemical Co., Ltd., Tokyo 100-0004 (JP)
(72) Inventor: NAKANISHI, Tetsuo, Annaka-shi Gunma 379-0224 (JP); TANIGUCHI, Kazuyuki, Annaka-shi Gunma 379-0224 (JP); YAMADA, Yoshiyasu, Annaka-shi Gunma 379-0224 (JP)
(74) Representative: Wibbelmann, Jobst
(86) International application number: PCT/JP2013/005907
(87) International publication number: WO 2014/073155

(57) **Abstract**

The present invention manufactures silicon-containing particles for use in a negative electrode active material of a non-aqueous electrolyte secondary battery by obtaining the silicon-containing particles by a deposition method and performing a heat treatment on the silicon-containing particles under a reducing atmosphere at, for example, 400°C to 1100°C. The silicon-containing particles manufactured by this method have an oxygen content ranging from 0.1 to 1.5 mass%. These silicon-containing particles enable manufacture of a non-aqueous electrolyte secondary battery that has a high initial efficiency and an excellent cycle performance and exhibits a small volume variation upon charging and discharging.

## Description

### TECHNICAL FIELD

The present invention relates to a method of manufacturing silicon-containing particles for use in a negative electrode active material of a non-aqueous electrolyte secondary battery, a negative electrode material for use in a non-aqueous electrolyte secondary battery, a non-aqueous electrolyte secondary battery, and the silicon-containing particle.

### BACKGROUND ART

As mobile devices such as mobile electronic devices and mobile communication devices have highly developed, non-aqueous electrolyte secondary batteries with higher energy density are needed to improve efficiency and reduce the size and weight of the devices.

Silicon is the most promising material to reduce a battery size and increase a battery capacity since it exhibits a theoretical capacity of 4,200 mAh/g, which is much higher than a theoretical capacity of 372 mAh/g of carbonaceous materials that are currently used in commercial batteries.

Patent document 1, for example, discloses a lithium-ion secondary battery using a silicon single crystal support for a negative electrode active material.

Patent document 2 discloses a lithium-ion secondary battery using a lithium alloy LiₓSi (where x is a value of 0 to 5) of single crystal silicon, polycrystalline silicon, or amorphous silicon. In this document, LiₓSi of amorphous silicon is preferred, and pulverized crystalline silicon coated with amorphous silicon obtained by plasma decomposition of monosilane is exemplified.

The example of this document uses 30 parts of silicon and 55 parts of a graphite conductive agent, but nevertheless cannot take full advantage of the potential battery capacity of silicon.

Patent documents 3 to 5 disclose methods of depositing an amorphous silicon thin film on an electrode current collector by a deposition method to use the film as a negative electrode.

Patent document 6 discloses a method of controlling a growth direction to inhibit a decrease in cycle performance due to volume expansion during vapor phase growth of silicon directly on the current collector. This method is considered to enable production of a high-capacity negative electrode having a good cycle performance. However, this method limits its production rate, thereby increasing cost. In addition, it is difficult to increase the thickness of the silicon thin film, and copper that forms the negative-electrode current collector is diffused into the silicon.

In view of these problems, there has recently been disclosed the following methods: a method for suppressing volume expansion by using silicon-containing particles and restricting the utilization ratio of the silicon battery capacity (Patent document 7 to 9); a method for using the grain boundary of a polycrystalline particle as a buffer to volume variations by rapidly cooling a silicon melt in which alumina is added (Patent document 10); a method of using polycrystalline particles of mixed phase polycrystals of α- and β-FeSi₂ (Patent document 11); and a method of high temperature plastic working of a single crystal silicon ingot (Patent document 12).

As described above, metallic silicon and silicon alloy with various crystal structures have been suggested to use silicon as an active material. All of these materials, however, have a cost disadvantage. Yet, no one has suggested a manufacturing method that enables mass synthesis at low cost.

### CITATION LIST

### PATENT LITERATURE

Patent Document 1:Japanese Patent No.2964732
Patent Document 2:Japanese Patent No.3079343
Patent Document 3:Japanese Patent No.3702223
Patent Document 4:Japanese Patent No.3702224
Patent Document 5:Japanese Patent No.4183488
Patent Document 6:Japanese Unexamined Patent publication (Kokai) No.2006-338996
Patent Document 7:Japanese Unexamined Patent publication (Kokai) No.2000-173596
Patent Document 8:Japanese Patent No.3291260
Patent Document 9:Japanese Unexamined Patent publication (Kokai) No.2005-317309
Patent Document 10:Japanese Unexamined Patent publication (Kokai) No.2003-109590
Patent Document 11:Japanese Unexamined Patent publication (Kokai) No.2004-185991
Patent Document 12:Japanese Unexamined Patent publication (Kokai) No.2004-303593

### SUMMARY OF INVENTION

### TECHNICAL PROBLEM

The present invention was accomplished in view of the above-described problems. It is an object of the present invention to provide a method of manufacturing silicon-containing particles for use in a negative electrode active material that enables manufacture of a non-aqueous electrolyte secondary battery having a high initial efficiency and an excellent cycle performance and exhibiting a small volume variation upon charging and discharging at low cost.

### SOLUTION TO PROBLEM

To achieve this object, the present invention provides a method of manufacturing silicon-containing particles for use in a negative electrode active material of a non-aqueous electrolyte secondary battery, comprising: obtaining the silicon-containing particles by a deposition method; and performing a heat treatment on the silicon-containing particles under a reducing atmosphere.

The silicon-containing particles, for use in a negative electrode active material of a non-aqueous electrolyte secondary battery, manufactured by this type of method have a low content of oxygen and a small BET specific surface area. Use of these particles as the negative electrode active material allows a non-aqueous electrolyte secondary battery having a high initial efficiency, a high capacity and a long lifetime to be manufactured at low cost.

The reducing atmosphere, under which the heat treatment is performed on the silicon-containing particles obtained by the deposition method, is preferably a reducing gas atmosphere and/or a reduced pressure atmosphere.

The reducing gas is preferably selected from the group consisting of hydrogen, carbon monoxide, hydrogen sulfide, sulfer dioxide, methane, ethane, acetylene, propane, and a combination thereof.

The reduced pressure atmosphere of the heat treatment is preferably an atmosphere under a reduced pressure ranging from 1 to 500 Pa, or a vacuum atmosphere, in the inventive method of manufacturing silicon-containing particles for use in a negative electrode active material of a non-aqueous electrolyte secondary battery.

The inventive method of manufacturing can reduce oxygen in the atmosphere by performing the heat treatment under a given reduced pressure atmosphere or a vacuum, thereby reliably reducing the oxygen content in the silicon-containing particles to be manufactured. A non-aqueous electrolyte secondary battery using these particles has a high initial efficiency, a high battery capacity and a long lifetime.

The silicon-containing particles obtained by the deposition method preferably contains one or more selected from the group consisting of boron, aluminum, phosphorus, titanium, vanadium, chromium, manganese, iron, cobalt, nickel, copper, zinc, arsenic, germanium, tin, antimony, indium, tantalum, tungsten, and gallium.

The silicon-containing particles, for use in a negative electrode active material of a non-aqueous electrolyte secondary battery, containing one or more selected from these elements reduce their volume resistivity and hence have excellent conductivity.

The temperature, at which the heat treatment is performed on the silicon-containing particles obtained by the deposition method under a reducing atmosphere, preferably ranges from 400°C to 1100°C, in the inventive method of manufacturing silicon-containing particles for use in a negative electrode active material of a non-aqueous electrolyte secondary battery.

Performing the heat treatment on the silicon-containing particles obtained by the deposition method at temperatures of this range can reliably reduce the content of oxygen contained in the particles and the BET specific surface area, and relieve the internal strain of the deposited particles.

The silicon-containing particles manufactured by the inventive method are preferably used as a negative electrode active material for use in a negative electrode material of a non-aqueous electrolyte secondary battery.

The negative electrode material using the inventive silicon-containing particles as the negative electrode active material can provide a non-aqueous electrolyte secondary battery having a high capacity and a long lifetime at low cost.

The negative electrode material for use in a non-aqueous electrolyte secondary battery preferably contains a binder and a conductive agent, and a ratio of the negative electrode active material to the negative electrode material preferably ranges from 60 to 97 mass%, a ratio of the binder to negative electrode material preferably ranges from 3 to 20 mass%, and a ratio of the conductive agent to negative electrode material preferably ranges from 0 to 37 mass%.

The negative electrode material containing the binder and the conductive agent can be inhibited from being detached from a current collector due to its volume expansion upon charging and discharging and from being separated from the active material.

In addition to this, this negative electrode material having such content ratios effectively improves its conductivity and prevents the separation of the negative electrode active material.

A non-aqueous electrolyte secondary battery according to the invention preferably includes a negative electrode body made of the inventive negative electrode material, a positive electrode body, a separator, and a non-aqueous electrolyte.

This type of non-aqueous electrolyte secondary battery using the inventive negative electrode material has a high capacity and a long lifetime.

The non-aqueous electrolyte secondary battery using the inventive negative electrode material is preferably a lithium-ion secondary battery.

A non-aqueous electrolyte secondary battery using silicon-containing particles manufactured by the inventive method as a negative electrode active material for use in a negative electrode material is suitably applied to a lithium-ion secondary battery because compared with a conventional battery made of graphite, this battery has a higher capacity, lower irreversible capacity and excellent cycle performance and can inhibit its volume variation upon charging and discharging to a lower level.

A silicon-containing particle according to the invention, for use as a negative electrode active material of a non-aqueous electrolyte secondary battery, is manufactured by obtaining the silicon-containing particles by a deposition method and performing a heat treatment on the silicon-containing particles under a reducing atmosphere such that an oxygen content of the silicon-containing particle ranges from 0.1 to 1.5 mass%.

The silicon-containing particle having an oxygen content ranging from 0.1 to 1.5 mass% enables a non-aqueous electrolyte secondary battery manufactured by using this particle as a negative electrode active material to have an improved first charge and discharge performance (a ratio of a discharge capacity to a charge capacity at the first charging and discharging), a low rate of volume variation and an excellent charge capacity.

### ADVANTAGEOUS EFFECTS OF INVENTION

The present invention can provide silicon-containing particles that enable a non-aqueous electrolyte secondary battery using these particles as a negative electrode active material to have a high capacity and a long lifetime at low cost.

### DESCRIPTION OF EMBODIMENTS

The present inventors diligently conducted studies on a silicon active material exhibiting a battery capacity per volume that greatly exceeds 844 mAh/cm³, which a carbon material exhibits, and a method of manufacturing the material at low cost.

The inventors consequently found the following. Silicon-containing particles, for use in a negative electrode active material of a non-aqueous electrolyte secondary battery, having a low oxygen content of 0.1 to 1.5 mass% and a low BET specific surface area can be manufactured by obtaining silicon-containing particles by a deposition method and performing a heat treatment on the particles under a reducing atmosphere at, for example, 400°C to 1100°C. From these particles, an active material can be manufactured which is useful for a negative electrode of a non-aqueous electrolyte secondary battery that has a high initial efficiency, for example, exceeding 1,500 mAh/cm³, a high battery capacity and an excellent cycle performance and that exhibits an inhibited volume variation upon charging and discharging. In addition, since an inexpensive metallic silicon can be used as a raw material, the production cost can be greatly reduced compared with previously. The inventors thereby brought the invention to completion.

The prevent invention will hereinafter be described in detail, but the invention is not limited thereto.

The inventive silicon-containing particle for use in a negative electrode active material of a non-aqueous electrolyte secondary battery has an oxygen content ranging from 0.1 to 1.5 mass%, and is manufactured by a method of performing a heat treatment on silicon-containing particle obtained by a deposition method under a reducing atmosphere at, for example, 400°C to 1100°C.

The silicon-containing particle, for use in a negative electrode active material of a non-aqueous electrolyte secondary battery, manufactured by this type of method has a low oxygen content and a low BET specific surface area. When such a silicon-containing particle is used as a negative electrode active material of a non-aqueous electrolyte secondary battery, since the volume variation is inhibited upon charging and discharging and the stress at a crystal grain boundary is thereby relieved, the non-aqueous electrolyte secondary battery can maintain a high initial efficiency and battery capacity attributable to silicon and an excellent cycle performance. In addition, since the method can use an inexpensive metallic silicon as a raw material, the method enables manufacture of a large amount of the above silicon-containing particles for use in a negative electrode active material of a non-aqueous electrolyte secondary battery, which have such an excellent battery performance and are polycrystals suitable for the negative electrode active material. The production cost can thereby be greatly reduced compared with previously.

The silicon-containing particles may also be used by adding another element thereto so as to improve their electron conductivity and greatly decrease their volume resistivity.

From the viewpoint of vapor pressure and effects, desirable examples of the additive element include one or more selected from the group consisting of boron, aluminum, phosphorus, titanium, vanadium, chromium, manganese, iron, cobalt, nickel, copper, zinc, arsenic, germanium, tin, antimony, indium, tantalum, tungsten, and gallium. These elements are added as necessary, and its amount may be about 10 mass% or less, preferably 0.001 to 1 mass%, more preferably 0.01 to 0.6 mass%. In this case, 0.001 mass% or more of the additive can reliably reduce the volume variation; 1 mass% or less of the additive makes it difficult to cause the segregation of the additive and can prevent an increase in the volume variation.

The silicon-containing particles for use in a negative electrode active material of a non-aqueous electrolyte secondary battery obtained in the above manner have a grain boundary between an amorphous layer and a crystalline layer. These particles can relieve stress in the amorphous layer and the grain boundary, thereby inhibiting from collapsing during charging and discharging cycles. A non-aqueous electrolyte secondary battery including a negative electrode using these particles can endure the stress due to its volume expansion upon charging and discharging and exhibit battery characteristics of a high capacity and a long lifetime.

The following description includes the detail of the inventive method of manufacturing silicon-containing particles for use in a negative electrode active material of a non-aqueous electrolyte secondary battery, and a negative electrode material, a negative electrode, and a non-aqueous electrolyte secondary battery that use these particles as a negative electrode active material of a non-aqueous electrolyte secondary battery. The invention, however, is not limited thereto.

First, silicon can be deposited on a substrate by a deposition method, for example, under reduced pressure. Instead, silicon alloy is preferably deposited by a deposition method using a raw material of silicon and one or more selected from the group consisting of boron, aluminum, phosphorus, titanium, vanadium, chromium, manganese, iron, cobalt, nickel, copper, zinc, arsenic, germanium, tin, antimony, indium, tantalum, tungsten, and gallium.

This silicon raw material may be selected from single crystal silicon, polycrystalline silicon and amorphous silicon depending on the crystallinity, or from chemical grade silicon and metallurgical grade silicon, which are called metallic silicon, depending on the purity. In particular, the metallic silicon is preferable because of its low cost.

The method of depositing silicon may be performed by vacuum deposition or sputtering. The vacuum deposition is preferable because it is efficient due to a higher deposition rate. The vacuum deposition is selected, depending on a deposition material or substrate on which silicon is deposited, from various methods: a resistance heating method; an electron beam heating method; a dielectric heating method; a laser heating method. The electron beam heating method is advantageous because of a high thermal efficiency.

An exemplary method of depositing silicon by the electron beam heating involves receiving metallic silicon raw material in a copper hearth and reducing pressure in its chamber. Providing the copper hearth with a hearth liner made of wood carbon or graphite particularly allows its thermal efficiency of an electron beam to be improved.

In deposition of silicon-containing particles by this type of electron beam heating method, conditions under which the metallic silicon is irradiated with an electron beam may include a power output of 50 to 250 kW for about 20 kg or less of melt amount, or 50 to 150 kW if the hearth liner is used. In this case, the output of the electron beam per area ranges from 0.2 to 5 kW/cm². When this output is 0.2 kW/cm² or more, an adequate deposition rate is secured to improve the productivity; when this output is 5 kW/cm² or less, bumping of the melt due to an unstable melt surface can be prevented. The output per area is preferably in the range from 0.5 to 3.5 kW/cm². Emitting an electron beam with an output of this range allows productive crystal particles to be obtained.

The other conditions may include a reduced pressure in the chamber, which is commonly 1×10⁻⁵ to 1×10⁻² Pa. The smaller the reduced pressure, the larger a possible amount of deposition. When the reduced pressure is 1×10⁻⁵ Pa or more, the load and cost of a pressure reducing apparatus can be reduced; when the reduced pressure is 1×10⁻² Pa or less, the output of an electron bean gun is stabilized and the heating process by the electron bean can be facilitated.

The substrate for deposition is preferably made of a material that is not alloyed with silicon when the silicon is deposited, which means that silicon can hardly be attached to the substrate without being alloyed during the deposition of the silicon and the deposited silicon can readily be detached after the deposition. The material of such a substrate may be, for example, stainless steel such as SUS304 or SUS340, or stainless steel whose surface is mirror-polished or subjected to plating or coating.

Such a substrate, which is made of a material that is not alloyed with silicon when the silicon is deposited, enables the deposited silicon to be readily detached from the substrate after the deposition, thereby making it easy to complete pulverizing and classifying processes. As a result, the productivity can be improved, and the inventive silicon-containing particles for use in a negative electrode active material of a non-aqueous electrolyte secondary battery can be manufactured at lower cost.

The temperature of the substrate for deposition is preferably adjusted within the range from 200°C to 1000°C, more preferably from 300°C to 500°C. Temperature may be adjusted by embedding a hot wire in the substrate, or in an indirect heating manner by using, for example, an infrared heater. If the substrate is cylindrical, then a heating medium may be used instead of the embedded heater. Since the temperature of the substrate may exceed a desired temperature due to radiant heat from the melt during deposition, a cooling medium is preferably used to cool the substrate in addition to the heating medium. The adjustment of the substrate temperature may be performed by a direct method using a sheathed thermocouple or a platinum resistance temperature detector, or by a non-contacting method using a radiation thermometer or an optical thermometer.

A lump of the deposited silicon or silicon particles thus obtained is subjected to a heat treatment under a reducing atmosphere at temperatures ranging from 400°C to 1100°C so that the oxygen content in the particle and the BET specific surface area can be reduced, and the internal strain of the deposited particle can be relieved. The reducing atmosphere in the invention is a reducing gas atmosphere such as hydrogen, carbon monoxide, hydrogen sulfide, sulfer dioxide, or a hydrocarbon gas such as methane, ethane, acetylene, or propane, which produces carbon by pyrolysis and reacts with oxygen. In particular, the reducing gas atmosphere is preferably hydrogen or carbon monoxide; acetylene, which has a low pyrolysis temperature, is also preferably used. If the hydrocarbon gas is used, the heat treatment is preferably performed at temperatures equal to or lower than the temperature at which carbon is deposited on the silicon surface; if acetylene is used, this temperature is preferably 900°C or less.

An apparatus that performs the heating process may be used under reduced pressure or normal pressure. The reduced pressure means a pressure lower than normal pressure, and may be a vacuum. In particular, the reduced pressure may range from 1 to 500 Pa, preferably 1 to 100 Pa, more preferably 2 to 50 Pa. If the pressure is within the above range, an inert gas such as argon or helium may be supplied together with the reducing gas. The heat treatment may be performed on the lump of the deposited silicon or on silicon particles after pulverizing and classifying processes. This heat treatment is performed preferably for about 1 to 5 hours, more preferably at 600°C to 1000°C for 1 to 3 hours.

It is to be noted that after the deposited silicon is detached from the substrate, the detached silicon is pulverized and classified in a conventional manner such that the size of the resultant particles becomes a desired size.

Examples of pulverizer to be used include a ball mill and a media agitating mill, which move grinding media such as balls or beads and pulverize an object by using impact forces, friction forces or compression forces generated by the kinetic energy; a roller mill, which pulverizes an object by using compression forces generated by rollers; a jet mill, which causes an object to collide against an inner wall or against part of the broken object at a high speed and pulverizes the object by impact forces generated by the collision; a hammer mill, pin mill and disc mill, which pulverize an object by using impact forces generated by rotation of a rotor with hammers, blades or pins attached thereto; a colloid mill using shear forces; and a wet, high pressure, counter-impingement dispersing machine "Ultimizer".

Either wet or dry pulverizing may be employed.

The pulverizing is followed by dry, wet or sieve classifying in order to make particle size distribution uniform.

The dry classifying mainly uses a gas stream and is performed by successive or simultaneous processes of dispersion, separation (separation between fine and coarse particles), collection (separation between solid and gas), and discharge. Before the classifying, a pretreatment such as adjustment of water content, dispersiveness, humidity, or other conditions may be performed, or the moisture content or oxygen concentration of the gas stream to be used may be adjusted. Performing either this pretreatment or this adjustment allows the prevention of reduction in classifying efficiency due to interference between particles, particle shape, turbulence of the gas stream, velocity distribution, electrostatic charges, or other causes.

An integrated type of dry pulverizer and classifier can conduct pulverizing and classifying operations at once to achieve desired particle size distribution.

The pulverizing and the classifying can be performed such that the size of the silicon-containing particles for use in a negative electrode active material of a non-aqueous electrolyte secondary battery ranges from 1 µm to 20 µm in terms of a volume mean diameter D₅₀ (a particle size or a median diameter when a cumulative volume is 50%) based on a measurement method of particle size distribution by a laser diffraction scattering.

Performing these processes such that D₅₀ is 1 µm or more can lower the risk of reduction in charge and discharge capacities per volume due to a decrease in bulk density to the utmost.

Performing these processes such that D₅₀ is 20 µm or less can lower the risk of a short circuit due to a particle penetrating a negative electrode film to the minimum, significantly reduce the possibility that the negative electrode material is detached from the current collector, and make it easy to form the electrode.

After the silicon-containing particles for use in a negative electrode active material of a non-aqueous electrolyte secondary battery are pulverized so as to have a prescribed size, these particles may be subjected to thermal chemical vapor deposition to improve their conductivity by forming a carbon film on the surface of each particle; this thermal chemical vapor deposition is performed at temperatures ranging from 600°C to 1200°C (preferably 800°C to 1000°C) under normal pressure or reduced pressure in as little time as possible with a hydrocarbon compound gas and/or vapor supplied.

The silicon-containing particles pulverized so as to have a prescribed size may alternatively be coated with a metallic oxide such as aluminum oxide, titanium oxide, zinc oxide, or zirconium oxide.

Such silicon-containing particles are obtained by performing a reduction treatment on silicon particles or silicon alloy particles obtained by a vapor deposition method according to the inventive method, as described above. Use of these particles as a negative electrode active material of a negative electrode can provide a non-aqueous electrolyte secondary battery having a higher capacity than that of a conventional one made of graphite and a lower irreversible capacity than that of a conventional one made of silicon oxide or a material using silicon oxide as a raw material, such as a silicon-silicon dioxide dispersing compound obtained by disproportionation of silicon oxide. In addition, these particles enable manufacture of a non-aqueous electrolyte secondary battery, particularly a lithium-ion secondary battery, which, compared with metallic silicon itself, has excellent cycle performances: the volume variation upon charging and discharging is regulated to a lower level; adhesion between these particles and a binder is excellent.

Moreover, since these particles can be manufactured by using inexpensive metallic silicon as a raw material, there is an advantage that these particles, which are negative electrode active material having excellent cycle performances, are very inexpensive. As a result, the production cost of a non-aqueous electrolyte secondary battery can be reduced.

When a negative electrode material is produced from the inventive silicon-containing particles for use in a negative electrode active material of a non-aqueous electrolyte secondary battery, a binder is preferably added. The binder is preferably a polyimide resin; a polyamide resin, a polyamide-imide resin, or particularly an aromatic polyimide resin may be used other than the polyimide resin.

The aromatic polyimide resin, for example, has excellent solvent resistance, and can inhibit the detachment of the negative electrode material from the current collector and the separation of the active material, which both are caused by the volume expansion upon charging and discharging.

In general, an aromatic polyimide resin is insoluble in an organic solvent. In particular, the aromatic polyimide resin is required to prevent its swelling and dissolution in an electrolyte.

The aromatic polyimide resin, however, is soluble in an organic solvent having a high boiling point such as cresol. From these facts, the production of an electrode paste preferably includes a preparation process of a binder as follows: a polyimide precursor in a state of a polyamic acid is added in an organic solvent; the resultant is subjected to a long heat treatment at temperatures of 300°C or more so as to be dehydrated and imidized. The polyamic acid state makes it comparatively easy to dissolve the polyimide precursor in various organic solvents such as dimethylformamide, dimethylacetamide, N-methylpyrrolidone, ethyl acetate, acetone, methyl ethyl ketone, methyl isobutyl ketone, and dioxolan.

In this case, the aromatic polyimide resin has a basic skeleton composed of tetracarboxylic dianhydrides and diamines. Preferred examples of the tetracarboxylic dianhydrides include aromatic tetracarboxylic dianhydrides such as pyromellitic dianhydride, benzophenonetetracarboxylic dianhydride and biphenyltetracarboxylic dianhydride, alicyclic tetracarboxylic dianhydrides such as cyclobutanetetracarboxylic dianhydride, cyclopentanetetracarboxylic dianhydride and cyclohexanetetracarboxylic dianhydride, and aliphatic tetracarboxylic dianhydrides such as butanetetracarboxylic dianhydride.

Examples of the diamines include aromatic, alicyclic and aliphatic diamines such as p-phenylene diamine, m-phenylene diamine, 4,4'-diaminodiphenylmethane, 4,4'-diaminodiphenyl ether, 2,2'-diaminodiphenylpropane, 4,4'-diaminodiphenyl sulfone, 4,4'-diaminobenzophenone, 2,3-diaminonaphthalene, 1,3-bis(4-aminopl2enoxy)benzene, 1,4-bis(4-aminophenoxy)benzene, 4,4'-di(4-aminophenoxy)diphenyl sulfone, 2,2'-bis[4-(4-aminophenoxy)phenyl]propane.

Synthesis of polyamic acid intermediate is commonly carried out by a solution polymerization process. Examples of a solvent used in this process include N,N'-dimethylformamide, N,N'-dimethylacetamide, N-methyl-2-pyrrolidone, N-methylcaprolactam, dimethyl sulfoxide, tetramethyl urea, pyridine, dimethyl sulfone, hexamethylphosphoramide, and butyrolactone, alone or in a mixture thereof.

The reaction temperature in the above process commonly ranges from -20°C to 150°C, preferably from -5°C to 100°C.

The polyamic acid intermediate is converted into a polyimide resin. This conversion is typically performed by a heating process to cause its dehydration and cyclization. The temperature at which this heating process is performed may be freely selected within the range from 140 to 400°C, preferably from 150 to 250°C. The time required for the dehydration and cyclization is 30 seconds to 10 hours, preferably 5 minutes to 5 hours, depending on the processing temperature.

Such polyimide resin is available as polyimide resin powder or an N-methylpyrrolidone solution of a polyimide precursor. Examples of the available polyimide resin include U-Varnish A, U-Varnish S, UIP-R and UIP-S (Ube Industries Ltd.), KAYAFLEX KPI-121 (Nippon Kayaku Co., Ltd.), and Rikacoat SN-20, PN-20 and EN-20 (New Japan Chemical Co., Ltd.).

The mass ratio of the inventive negative electrode active material to the entire negative electrode material may be 60 to 97 mass%, preferably 70 to 95 mass%, more preferably 75 to 95 mass%. If a conductive agent is added to the negative electrode material as described later, the maximum mass ratio of the negative electrode active material is preferably 96 mass% or less, more preferably 94 mass% or less, further preferably 93 mass% or less.

Moreover, the mass ratio of the binder to the entire negative electrode material is preferably 3 to 20 mass%, more preferably 5 to 15 mass%. When the mass ratio of the binder is in this range, the negative electrode can lower the risk of the separation of the negative electrode active material and the impediment to the movement of Li ions due to reduction in porosity followed by enlargement of an insulator film to the utmost.

When the negative electrode material is produced by using the silicon-containing particles as the active material and the binder such as a polyimide resin, the conductive agent, such as graphite, may be added thereto to improve its conductivity.

In this case, there is no particular limitation on the conductive agent, provided the conductive agent has an electronically conductive material that is undecomposable and unchangeable in quality in assembled batteries. Specific examples of the conductive agent include powder or fiber of metal such as Al, Ti, Fe, Ni, Cu, Zn, Ag, Sn and Si, or graphite such as natural graphite, synthetic graphite, powder of various cokes, meso-phase carbon, vapor phase grown carbon fiber, pitch base carbon fiber, PAN base carbon fiber, and various sintered resin.

Such a conductive agent is preferably dispersed into water or a solvent such as N-methyl-2-pyrrolidone, and the resultant is preferably added to the negative electrode material, for this allows formation of an electrode paste in which the conductive agent is uniformly dispersed and attached to the silicon-containing particles for use in a negative electrode active material of a non-aqueous electrolyte secondary battery. It is to be noted that any known surfactant may be used to disperse the conductive agent in the solvent. The solvent, into which the conductive agent is dispersed, is preferably the same as in the binder.

If the conductive agent is used, then the mass ratio of the conductive agent to the entire negative electrode material is preferably 0 to 37 mass%, more preferably 1 to 37 mass%. If the conductive agent is dispersed into water or a solvent, the mass ratio of the conductive agent is preferably 1 to 37 mass%, more preferably 1 to 20 mass%, further preferably 2 to 10 mass%.

When the mass ratio of the conductive agent is in the above range, an increase in first resistance due to a lack of conductivity of the negative electrode material can be reliably inhibited. In addition, the reduction in battery capacity due to an increase in the amount of the conductive agent can be prevented.

Moreover, carboxymethyl cellulose, sodium polyacrylate, acrylic polymers or fatty acid esters may be added as a viscosity regulator to the negative electrode material together with the binder, such as polyimide resin.

From the inventive negative electrode material for use in a non-aqueous electrolyte secondary battery, obtained in the above manner, a negative electrode can be produced as follows.

The negative electrode material composed of the negative electrode active material, the conductive agent, the binder, and other additives are mixed in a solvent, such as water or N-methylpyrrolidone, suitable for dissolution and dispersion of the binder, so that a paste mixture is formed. This mixture is applied to the current collector so as to form a sheet thereof. A material such as copper foil or nickel foil that is commonly used for a negative electrode collector may be used for this current collector without limit of its thickness and a surface treatment. The method for forming the mixture sheet is not particularly limited, but may be a known method.

A negative electrode including this type of negative electrode material is mainly composed of a negative electrode active material that is made of the inventive silicon-containing particles for use in a negative electrode active material of a non-aqueous electrolyte secondary battery having a greatly smaller volume variation upon charging and discharging compared with one made of conventional silicon-containing particles. In addition, the variation in thickness of the negative electrode after charging is less than three times (especially 2.5 times) as large as before charging.

A negative electrode body using the negative electrode thus obtained can be used to manufacture a non-aqueous electrolyte secondary battery, and particularly a lithium-ion secondary battery.

Such a non-aqueous electrolyte secondary battery is characterized by using this negative electrode body. Other materials such as a positive electrode (a positive electrode body), a separator, an electrolytic solution, and a non-aqueous electrolyte and the battery shape are not particularly limited.

Examples of a positive electrode active material include oxides and sulfides that can occlude and release lithium ions, alone or in combination.

Specific examples include sulfides and oxides of metals containing no lithium such as TiS₂, MoS₂, NbS₂, ZrS₂, VS₂, V₂O₅, MoO₃, and Mg(V₃O₈)₂, lithium, lithium-containing complex oxides, composite metals such as NbSe₂, and olivine iron. To increase an energy density, a lithium complex oxide based on LiₚMetO₂ is preferably used. Then, Met is preferably at least one element of cobalt, nickel, iron and manganese and p is a value in the range of 0.05≤p≤1.10. Specific examples of the lithium complex oxide include LiCoO₂, LiNiO₂, LiFeO₂, and Li_{q}NiᵣCo₁₋ᵣO₂ that have a layered structure (where 0<q<1 and 0.7<r≤1 in general, but q and r vary depending on charged and discharged states of a battery), LiMn₂O₄ having a spinel structure, and rhombic LiMnO₂. Exemplary positive electrode active material for high voltage operation is a substitutional spinel manganese compound such as LiMet₅Mn₁₋ₛO₄ (0<s<1), where Met is titanium, chromium, iron, cobalt, nickel, copper, zinc or the like.

It is noted that the lithium complex oxide can be prepared, for example, by mixing a pulverized carbonate, nitrate, oxide or hydroxide of lithium with a pulverized carbonate, nitrate, oxide or hydroxide of a transition metal in accordance with the desired composition, and firing the mixture at temperatures ranging from 600°C to 1,000°C under an oxygen atmosphere.

Organic materials may also be used as the positive electrode active material. Examples of these materials include polyacetylene, polypyrrole, polyparaphenylene, polyaniline, polythiophene, polyacene, and polysulfide.

The positive electrode active material is mixed with the same conductive agent and binder as used for the negative electrode material. This mixture is applied to the current collector. A positive electrode body can be formed by a known method.

The separator disposed between the positive and negative electrodes is not particularly limited, provided it stabilizes against the electrolyte and holds the electrolyte effectively. Typical examples of the separator include a porous sheet or nonwoven fabric of: polyolefins such as polyethylene and polypropylene; copolymers thereof; and aramid resins. These may be used alone or as a laminate of multiple layers. Ceramics such as metal oxides may be deposited on the surface. Porous glass and ceramics may also be used.

The solvent used for a non-aqueous electrolyte secondary battery in the invention is not particularly limited, provided it can be used as the non-aqueous electrolyte.

Typical examples of the solvent include aprotic high-dielectric-constant solvents such as ethylene carbonate, propylene carbonate, butylene carbonate, and γ-butyrolactone; and aprotic low-viscosity solvents such as dimethyl carbonate, ethyl methyl carbonate, diethyl carbonate, methyl propyl carbonate, dipropyl carbonate, diethyl ether, tetrahydrofuran, 1,2-dimethoxyethane, 1,2-diethoxyethane, 1,3-dioxolan, sulfolane, methylsulfolane, acetonitrile, propionitrile, anisole, acetic acid esters, e.g., methyl acetate and propionic acid esters. These solvents are preferably used as a mixture of an aprotic high-dielectric-constant solvent and an aprotic low-viscosity solvent in a proper ratio.

It is also acceptable to use ionic liquid containing imidazolium, ammonium and pyridinium cations. A counter anion may be, but not particularly limited to, BF₄⁻, PF₆⁻ and (CF₃SO₂)₂N⁻. The ionic liquid may be used as a mixture with the above non-aqueous electrolyte solvent.

If a solid electrolyte or gel electrolyte is used, then the electrolyte may contain a silicone gel, silicone polyether gel, acrylic gel, silicone acrylic gel, acrylonitrile gel, poly(vinylidene fluoride), or other material, as a polymeric material. The polymerization may be brought before or after liquid insertion. These materials may be used alone or in combination.

Exemplary electrolyte salt include light metal salt.

Examples of the light metal salt include salts of alkali metals such as lithium, sodium and potassium, salts of alkaline earth metals such as magnesium and calcium, and aluminum salts. One or more of these light metal salts may be selected depending on the purpose. Exemplary lithium salts include LiBF₄, LiClO₄, LiPF₆, LiAsF6, CF₃SO₃Li, (CF₃SO₂)₂NLi, C₄F₉SO₃Li, CF₃CO₂Li, (CF₃CO₂)₂NLi, C₆F₅SO₃Li, C₈F₁₇SO₃Li, (C₂F₅SO₂)₂NLi, (C₄F₉SO₂) (CF₃SO₂)NLi, (FSO₂C₆F₄) (CF₃SO₂)NLi, ((CF₃) ₂CHOSO₂) ₂NLi, (CF₃SO₂) ₃CLi, (3, 5- (CF₃) ₂C₆F₃) ₄BLi, LiCF₃, LiAlCl₄, and C₄BO₈Li, alone or in combination.

From the viewpoint of electric conductivity, the concentration of the electrolyte salt in the non-aqueous electrolyte preferably ranges from 0.5 to 2.0 mol/L. The conductivity of the electrolyte is preferably 0.01 S/cm or more at a temperature of 25°C. This conductivity may be adjusted by the type and concentration of the electrolyte salt.

Moreover, the non-aqueous electrolytic solution may contain various additives as necessary.

Examples of these include: additives to improve cycle life such as vinylene carbonate, methyl vinylene carbonate, ethyl vinylene carbonate and 4-vinylethylene carbonate; additives to prevent overcharg such as biphenyl, alkylbiphenyl, cyclohexylbenzene, t-butylbenzene, diphenyl ether, and benzofuran; additives to remove acid and water such as various carbonate compounds, carboxylic acid anhydrides, nitrogen-containing compounds and sulfur-containing compounds.

The shape of the non-aqueous electrolyte secondary battery is not particularly limited and may be freely selected. Typical batteries has a coin form in which the electrodes and the separator that are punched out into a coin form are stacked, or a square or cylindrical form in which the electrode sheets and the separator are spirally coiled.

### EXAMPLE

The present invention will be more specifically described below with reference to examples and comparative examples, but the present invention is not limited to these examples.

In the below examples, the oxygen content was measured with an oxygen and nitrogen analyzing apparatus (TCH-600 made by Leco Corporation); the BET specific surface area was measured with an automatic measuring instrument of specific surface area (BELSORP-mini II made by BEL Japan Inc.); the volume resistivity was measured with a volume resistivity measuring instrument with four probes (MCP-PD51 made by Mitsubishi Chemical Corporation) and the value when a load of 20 kN was applied was represented. The mean diameter D₅₀ at a cumulative volume of 50% was measured by a wet method with a particle size distribution measuring instrument using laser diffractometry (MT3300EX II made by NIKKISO Co., Ltd.); elementary analysis was performed by the absolute calibration method with ICPAES (Agilent 730 made by Agilent Technologies Corporation).

### (Example 1)

A copper crucible having a 20-mm-thickness carbon hearth liber was installed in the interior of a vacuum chamber with exhaust equipment including an oil diffusion pump, a mechanical booster pump, and an oil-sealed rotary vacuum pump. Metallic silicon lumps of 8 kg was introduced into the copper crucible. The pressure of the chamber was decreased so as to reach 2×10⁻⁴ Pa after 2 hours.

The metallic silicon lumps were melted with an electron gun of a rectilinear electron beam type installed in the chamber. After the metallic silicon lumps were melted, a vapor deposition process was performed under conditions of an output of 120 kW and a beam area of 74 cm² for two hours. During the vapor deposition process, the temperature of a stainless steel substrate for use in vapor deposition was adjusted to 600°C. Opening the chamber, 3.5 kg of silicon deposition was obtained.

This silicon deposition was pulverized and classified with a jet mill (KJ-25 made by Kurimoto Ltd.), so that silicon-containing particles having D₅₀ of 8.0 µm, an oxygen content of 0.5%, and a BET specific surface area of 2.66 m²/g were obtained. These silicon-containing particles obtained by the deposition method were left and heated for three hours in an electric furnace having an alumina furnace tube whose temperature was held at 900°C under an air flow having a H²-Ar ratio of 10%. This heat treatment allowed for silicon-containing particles, for use in a negative electrode active material of a non-aqueous electrolyte secondary battery, having D₅₀ of 8.0 µm, an oxygen content of 0.8%, and a BET specific surface area of 2.13 m²/g.

### (Example 2)

Silicon-containing particles were obtained in the same procedure as in example 1 except that 8 kg of metallic silicon lumps containing 5.0 mass% of aluminum were introduced instead of the 8 kg metallic silicon lumps. The silicon-containing particles obtained by the deposition method were left and heated for three hours in an electric furnace having an alumina furnace tube whose temperature was held at 800°C under an air flow having an acetylene-Ar ratio of 10%. The obtained silicon-containing particles had D₅₀ of 8.0 µm, an oxygen content of 1.1%, and a BET specific surface area of 2.09 m²/g.

### (Example 3)

Silicon-containing particles were obtained in the same procedure as in example 1 except that 8 kg of metallic silicon lumps containing 5.0 mass% of cobalt were introduced instead of the 8 kg metallic silicon lumps. The silicon-containing particles obtained by the deposition method were left and heated for three hours in an electric furnace having an alumina furnace tube whose temperature was held at 800°C under a reduced pressure of 200 Pa and an air flow having an acetylene-Ar ratio of 10%. The obtained silicon-containing particles had D₅₀ of 8.5 µm, an oxygen content of 0.6%, and a BET specific surface area of 1.90 m²/g.

### (Example 4)

Silicon-containing particles were obtained in the same procedure as in example 1 except that 8 kg of metallic silicon lumps containing 5.0 mass% of germanium were introduced instead of the 8 kg metallic silicon lumps. The silicon-containing particles obtained by the deposition method were left and heated for three hours in an electric furnace having an alumina furnace tube whose temperature was held at 800°C under an air flow having an acetylene-Ar ratio of 10%. The obtained silicon-containing particles had D₅₀ of 8.2 µm, an oxygen content of 0.7%, and a BET specific surface area of 2.04 m²/g.

### (Example 5)

Silicon-containing particles were obtained in the same procedure as in example 1 except that 8 kg of metallic silicon lumps containing 10.0 mass% of titanium were introduced instead of the 8 kg metallic silicon lumps. The silicon-containing particles obtained by the deposition method were left and heated for three hours in an electric furnace having an alumina furnace tube whose temperature was held at 800°C under a reduced pressure of 100 Pa and an air flow having a carbon monoxide-Ar ratio of 10%. The obtained silicon-containing particles had D₅₀ of 8.3 µm, an oxygen content of 0.5%, and a BET specific surface area of 1.99 m²/g.

### (Comparative Example 1)

Silicon-containing particles were obtained in the same procedure as in example 1 except that the heat treatment was performed under an argon atmosphere. The obtained silicon-containing particles had D₅₀ of 8.0 µm, an oxygen content of 1.6%, and a BET specific surface area of 2.25 m²/g.

### (Comparative Example 2)

Silicon-containing particles were obtained in the same procedure as in example 2 except that the heat treatment was performed under an argon atmosphere. The obtained silicon-containing particles had D₅₀ of 8.0 µm, an oxygen content of 2.0%, and a BET specific surface area of 2.23 m²/g.

### (Comparative Example 3)

Silicon-containing particles were obtained in the same procedure as in example 3 except that the heat treatment was performed under an argon atmosphere. The obtained silicon-containing particles had D₅₀ of 8.5 µm, an oxygen content of 1.6%, and a BET specific surface area of 2.20 m²/g.

Table 1 summarizes the mean diameter D₅₀ at a cumulative volume of 50%, the oxygen content, the BET specific surface area, the volume resistivity upon applying a load of 20 kN of the silicon-containing particles for use in a negative electrode active material of a non-aqueous electrolyte secondary battery obtained by the method in examples 1 to 5 and comparative examples 1 to 3.

**[Table 1]**

| | ADDITIVE | | D₅₀ | OXYGEN CONTENT | BET | VOLUME RESISTIVITY |
|---|---|---|---|---|---|---|
| | ELEMENT | CONTENT% | µm | wt% | cm² / g | Ωcm |
| EXAMPLE 1 | none | - | 8.0 | 0.8 | 2.13 | 4.26 × 10⁶ |
| EXAMPLE 2 | Al | 4.1 | 8.0 | 1.1 | 2.09 | 3.43 × 10 |
| EXAMPLE 3 | Co | 2.1 | 8.5 | 0.6 | 1.90 | 2.16 × 10³ |
| EXAMPLE 4 | Ge | 4.7 | 8.2 | 0.7 | 2.04 | 1.73 × 10³ |
| EXAMPLE 5 | Ti | 2.7 | 8.3 | 0.5 | 1.99 | 2.65 × 10³ |
| COMPARATIVE EXAMPLE 1 | none | - | 8.0 | 1.6 | 2.25 | 5.82 × 10⁶ |
| COMPARATIVE EXAMPLE 2 | Al | 4.1 | 8.0 | 2.0 | 2.23 | 1.12 × 10 |
| COMPARATIVE EXAMPLE 3 | Co | 2.1 | 8.5 | 1.6 | 2.20 | 5.85 × 10³ |

As shown in Table 1, the negative electrode active materials of a non-aqueous electrolyte secondary battery manufactured under the conditions in examples 1 to 5 had an oxygen content of 1.5 mass% or less and a BET specific surface area of 2.20 cm²/g or less, which were lower than those in comparative examples 1 to 3.

Table 1 also shows that the silicon-containing particles for use in a negative electrode active material of a non-aqueous electrolyte secondary battery in examples 2 to 5, which were doped with other elements, had a lower volume resistivity and more excellent conductivity compared with example 1 that manufactured the silicon-containing particles from silicon as a single substance.

### <Battery Characteristic Evaluation>

The battery characteristics attributable to the silicon-containing particles, for use in a negative electrode active material of a non-aqueous electrolyte secondary battery, obtained in examples 1 to 5, and comparative examples 1 to 3 were evaluated to check their usefulness as the negative electrode active material.

A mixture of 85 mass% of the silicon-containing particles in each of examples 1 to 5 and comparative examples 1 to 3, 2.5% of synthetic graphite having a mean diameter D₅₀ of 3 µm as a conductive agent, and acetylene black was diluted with N-methylpyrrolidone. The acetylene black (17.5%) was dispersed in N-methylpyrrolidone at an amount of 2.5 mass% in terms of solids. A polyimide resin made by Ube Industries, Ltd. (trade name: U-Varnish A, solids 18%) as the binder was added to the resultant mixture in an amount of 10 mass% in terms of solids to form a slurry.

The slurry was applied to a 12-µm-thickness copper foil with a 75-µm doctor blade, pre-dried, and pressed by a roller press at 60°C into an electrode form. This electrode was dried at 200°C for two hours and punched out into a 2 cm² of negative electrode body.

Four lithium-ion secondary batteries for evaluation were manufactured by using the obtained negative electrode body, a lithium foil as a counter electrode, a non-aqueous electrolyte solution obtained by dissolving a non-aqueous electrolyte of lithium bis(trifluoromethanesulfonyl)imide in a 1/1 (by volume) mixture of ethylene carbonate and diethyl carbonate at a concentration of 1 mol/L, and a separator of a polyethylene microporous film having a thickness of 30 µm.

The manufactured lithium-ion secondary batteries were aged a night at room temperature. Two of the lithium-ion secondary batteries were then disassembled to measure the thickness of the negative electrodes and calculate electrode density on the basis of initial weight in a state where the swelling of electrodes by the electrolyte occurred. It is to be noted that it was calculated without taking into account an increase amount of lithium due to charge and of the electrolyte.

With a secondary battery charge/discharge tester (Nagano K.K.), the other two lithium ion secondary batteries were charged with a constant current of 0.15 c until the voltage of the test cell reached 0 V. After the voltage reached 0 V, the charging was continued while the current was decreased so as to keep the voltage of the test cell 0 V. When the current was decreased to less than 0.02 c, the charging was terminated to calculate the charge capacity. It is to be noted that the symbol "c" means a current value with which the theoretical capacity of a negative electrode is charged in 1 hour.

After the charging, the lithium ion secondary batteries for evaluation were disassembled to measure the thickness of the negative electrodes. The electrode density was calculated from the calculated thickness in the same manner as above and the charge capacity per volume upon charging was calculated. Table 2 shows the result.

### <Cycle Performance Evaluation>

Negative electrode bodies were prepared by using the negative electrode active materials in examples 1 to 5 and comparative examples 1 and 3 to evaluate their cycle performance. Positive electrode bodies were also made by using a positive electrode material: a positive electrode active material of LiCoO₂; and a current collector of an aluminum foil single layer sheet (trade name: Pioxcel C-100 made by Pionics Co., Ltd.). Four lithium-ion secondary batteries in coin form were manufactured by using a non-aqueous electrolyte solution obtained by dissolving a non-aqueous electrolyte of lithium hexafluorophosphate in a 1/1 (by volume) mixture of ethylene carbonate and diethyl carbonate at a concentration of 1 mol/L, and a separator of a polyethylene microporous film having a thickness of 30 µm.

The manufactured lithium-ion secondary batteries were left at room temperature two nights. With the secondary battery charge/discharge tester (Nagano K.K.), the lithium ion secondary batteries were charged with a constant current of 1.2 mA (0.25 c on the positive electrode basis) until the voltage of the test cell reached 4.2 V. After the voltage reached 4.2 V, the charging was continued while the current was decreased so as to keep the voltage of the test cell 4.2 V. When the current was decreased to less than 0.3 mA, the charging was terminated. The batteries were then discharged at a constant current of 0.6 mA. The discharging was terminated when the cell voltage reached 2.5 V to calculate the discharge capacity.

This operation was repeated 100 cycles. Table 2 shows the ratio of the discharge capacity after 100 cycles to the initial discharge capacity.

**[Table 2]**

| | RATE OF VOLUME VARIATION | CHARGE CAPACITY (mAh/cm³) | FIRST CHARGE AND DISCHARGE EFFICIENCY (%) | DISCHARGE CAPACITY RATIO AFTER 100 CYCLES |
|---|---|---|---|---|
| EXAMPLE 1 | 2.8 | 1490 | 93 | 85 |
| EXAMPLE 2 | 2.6 | 1530 | 92 | 83 |
| EXAMPLE 3 | 2.6 | 1510 | 91 | 83 |
| EXAMPLE 4 | 2.6 | 1495 | 93 | 84 |
| EXAMPLE 5 | 2.5 | 1580 | 93 | 86 |
| COMPARATIVE EXAMPLE 1 | 2.8 | 1410 | 87 | 77 |
| COMPARATIVE EXAMPLE 2 | 2.9 | 1380 | 89 | 79 |
| COMPARATIVE EXAMPLE 3 | 2.8 | 1390 | 88 | 78 |

As shown in Table 2, it was revealed that examples 1 to 5 demonstrated an improved initial charge and discharge performance due to a decrease in oxygen content, a lower rate of volume variation, and a higher charge capacity compared with comparative examples 1 to 3.

As shown in Table 2, it was revealed that the lithium-ion secondary batteries using the negative electrode active materials in examples 1 to 5 had a higher cycle performance than those using polycrystalline silicon-containing particles in comparative examples 1 to 3 had.

It is to be noted that the present invention is not limited to the foregoing embodiment. The embodiment is just an exemplification, and any examples that have substantially the same feature and demonstrate the same functions and effects as those in the technical concept described in claims of the present invention are included in the technical scope of the present invention.

## Claims

1. A method of manufacturing silicon-containing particles for use in a negative electrode active material of a non-aqueous electrolyte secondary battery, comprising:
obtaining the silicon-containing particles by a deposition method; and
performing a heat treatment on the silicon-containing particles under a reducing atmosphere.

2. The method of manufacturing silicon-containing particles according to claim 1, wherein the reducing atmosphere is a reducing gas atmosphere and/or a reduced pressure atmosphere.

3. The method of manufacturing silicon-containing particles according to claim 2, wherein the reducing gas is selected from the group consisting of hydrogen, carbon monoxide, hydrogen sulfide, sulfer dioxide, methane, ethane, acetylene, propane, and a combination thereof.

4. The method of manufacturing silicon-containing particles according to claim 2, wherein the reduced pressure ranges from 1 to 500 Pa, or a vacuum.

5. The method of manufacturing silicon-containing particles according to any one of claims 1 to 4, wherein the silicon-containing particles obtained by the deposition method contains one or more selected from the group consisting of boron, aluminum, phosphorus, titanium, vanadium, chromium, manganese, iron, cobalt, nickel, copper, zinc, arsenic, germanium, tin, antimony, indium, tantalum, tungsten, and gallium.

6. The method of manufacturing silicon-containing particles according to any one of claims 1 to 5, wherein the heat treatment is performed at temperatures ranging from 400°C to 1100°C.

7. A negative electrode material for use in a non-aqueous electrolyte secondary battery, comprising silicon-containing particles manufactured by the method according to any one of claims 1 to 6 as a negative electrode active material of the non-aqueous electrolyte secondary battery.

8. The negative electrode material according to claim 7, further comprising a binder and a conductive agent, wherein a ratio of the negative electrode active material to the negative electrode material ranges from 60 to 97 mass%, a ratio of the binder to the negative electrode material ranges from 3 to 20 mass%, and a ratio of the conductive agent to the negative electrode material ranges from 0 to 37 mass%.

9. A non-aqueous electrolyte secondary battery comprising:
a negative electrode body made of the negative electrode material according to claim 7 or claim 8;
a positive electrode body;
a separator; and
a non-aqueous electrolyte.

10. The non-aqueous electrolyte secondary battery according to claim 9, wherein the non-aqueous electrolyte secondary battery is a lithium-ion secondary battery.

11. A silicon-containing particle that is used as a negative electrode active material of a non-aqueous electrolyte secondary battery and manufactured by obtaining the silicon-containing particles by a deposition method and performing a heat treatment on the silicon-containing particles under a reducing atmosphere, wherein an oxygen content of the silicon-containing particle ranges from 0.1 to 1.5 mass%.
